# EUROPEAN PATENT SPECIFICATION

(11) **EP 3 167 272 B1**
(45) Date of publication and mention of the grant of the patent: **22.12.2021**
(21) Application number: 14897059.3
(22) Date of filing: 07.07.2014
(51) Int. Cl.: G01N 1/30, G01N 21/64, C12Q 1/00, G02B 21/34, G01N 1/28

(54) **AQUEOUS TISSUE CLEARING SOLUTION AND USES THEREOF**
WÄSSRIGE LÖSUNG ZUM KLÄREN VON GEWEBE UND VERWENDUNGEN DAVON
SOLUTION AQUEUSE POUR L'ÉCLAIRCISSEMENT D'UN TISSU, ET SES UTILISATIONS

(43) Date of publication of application: 17.05.2017
(73) Proprietor: Lin, Chih-yung, New Taipai City 238 (TW)
(72) Inventor: Lin, Chih-yung, New Taipai City 238 (TW)
(74) Representative: Lang, Christian
(86) International application number: PCT/CN2014/081712
(87) International publication number: WO 2016/004563

(56) References cited:
- EP-A1- 2 606 912
- EP-A1- 2 950 077
- WO-A1-2013/155064
- WO-A1-2013/191274
- WO-A2-2009/081169
- CN-A- 103 169 988
- US-A1- 2013 045 503
- US-A1- 2013 274 837
- US-B1- 6 472 216
- US-B1- 6 472 216
- MAURICE, DAVID M.: 'Clearing media for the eye' BRITISH JOURNAL OF OPHTHALMOLOGY vol. 71, no. 6, 31 December 1987, pages 470 - 472, XP055356220 DOI: 10.1136/BJO.71.6.470
- TATHAM, ANDREW J. ET AL.: 'Do Non-Ionic Contrast Media Temporarily Improve Corneal Transparency' JOURNAL OF OPHTHALMIC AND VISION RESEARCH vol. 8, no. 4, 01 October 2013, pages 400 - 402, XP055356223
- None
- D M Maurice: "Clearing media for the eye.", BRITISH JOURNAL OF OPHTHALMOLOGY, vol. 71, no. 6, 1 January 1987 (1987-01-01), pages 470-472, XP055356220, GB ISSN: 0007-1161, DOI: 10.1136/bjo.71.6.470

## Description

### BACKGROUND OF THE INVENTION

### 1 . FIELD OF THE INVENTION

The present disclosure in general relates to an aqueous solution for use with an optical microscope, particularly an aqueous clearing solution for making a biological material, such as a tissue or an organ of an animal, or a bio-engineering material transparent.

### 2. DESCRIPTION OF RELATED ART

Although fluorescent tracers and genetically encoded fluorescent proteins can be used to label cellular and sub-cellular architecture, tissue opacity often limits the depth of imaging. Opacity is also of a great concern in the field of bio-engineering. Bio-engineering materials such as collagen scaffolds are commonly used in tissue-engineering to aid the regeneration processes for injury repair and wound healing. However, collagen scaffolds are typically opaque, which limits the optical accessibility for in situ visualization of the scaffold and its interaction with the molecule/cell of interest. Conventionally, thick samples are sectioned into thin slices to visualize the internal targets. Sample images must then be reconstructed in three dimensions (3D), so that valuable information may be derived therefrom. However, the reconstruction process is neither as efficient nor as accurate. Over the past decade, a number of reagents have been developed to allow the biological materials to be see-through by naked eyes, including FocusClear solution described by Ann-Shyn Chiang (see US Patent No. 6,472,616B1), SCALEVIEW-A2 solution described by Miyawaki et al. (see USPG 20130045503A1), and CLARITY technique described by Chung et al (Nature (2013) 497, 332-337.) and benzyl-alcohol and benzyl-benzoate (BABB) solution described by Hans-Urich Dodt et al. (Nature Methods (2007) 4(4), 331 -336.). All of which preserve genetically expressed fluorescent signal improves the depth in imaging 3D tissue structure. However, FocusClear solution shrinks biological samples and does not sufficiently clear turbidity of tissue area deeper than 0.5mm. SCALEVIEW-A2 solution requires a long incubation time for clearing, from weeks to months, and causes immense expansion in tissue volume, resulting in very fragile samples. In addition, SCALEVIEW-A2 solution cannot clear tiny tissues such as insect brains. BABB causes irreversible tissue shrinkage and, owing to its reliance on organic solvents, it quenches the fluorescent signal of immunohistochemistry, conventional lipophilic carbocyanine dyes and fluorescent tracers such as cholera toxin subunit B (CTB). CLARITY technique requires time-consuming procedures, from days to weeks, and needs special designed equipments, such as electrophoretic tissue clearing, to make biological samples see-through. Since most of the lipid bilayers of cell membranes are removed by electrophoretic tissue clearing process, CLARITY technique cannot observe the intact morphologies of samples. In addition, CLARITY technique cannot clear bio-material such as collagen scaffold. More importantly, CLARITY technique will produce a lot of toxic wastes for it includes toxic ingredients such as acrylamide, a carcinogen and potent neurotoxin.

The present invention was made in order to solve the forgoing problems and to provide a novel clearing agent that is quick, easy and safe in making biological tissues, organs, and materials transparent.

### SUMMARY

The present invention is based, at least in part, on the unexpected discovery that an aqueous solution of certain agent(s) is capable of making a biological material (e.g., a tissue or an organ of an insect or a mammal, or a bio-engineering material (e.g., a collagen scaffold) transparent; hence allowing the biological material previously labeled with a marker (e.g., a dye or a fluorescent protein) to be traced after the tissue becomes transparent.

Accordingly, one aspect of the present invention is to provide a novel aqueous solution for rendering a biomaterial transparent. The aqueous solution of the present invention comprises at least 10% (w/v) of a first active compound of formula (I) 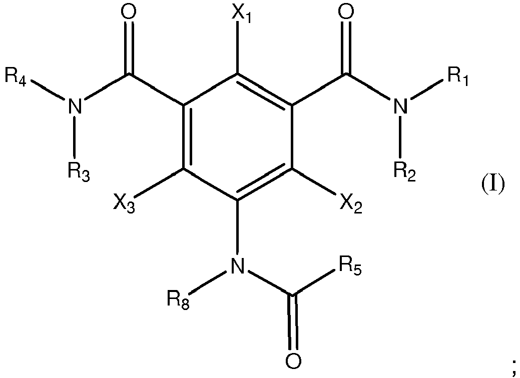 ; or at least 10% (w/v) of a second active compound of formula (II) 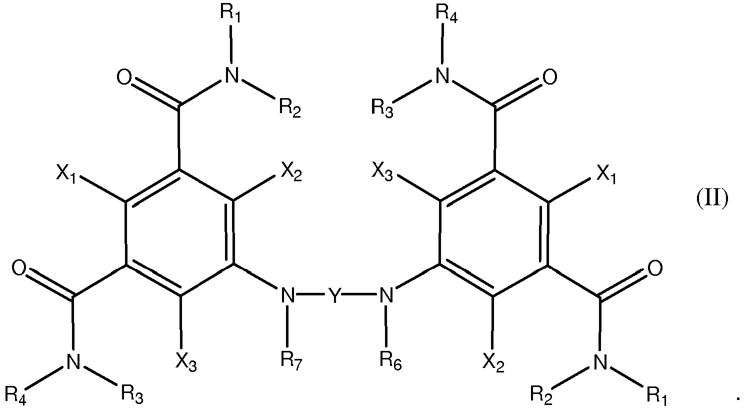 or a combination thereof;
a sufficient amount of a salt balanced buffer solution for dissolving the first or second active compound therein and thereby forming the aqueous solution;
5 to 10% (w/v) dimethyl sulfoxide (DMSO); and
5% (w/v) glycerol;
wherein:
   R₁, R₂, R₃, R₄ and R₈ are independently H, or C₁₋₆ alkyl substituted with at least two -OH;
   R₅ is -CH₂OCH₃ or C₁₋₃ alkyl optionally substituted with at least one -OH;
   R₆ and R₇ are independently acetyl or C₁₋₃ alkyl;
   X₁, X₂, and X₃ are independently a halogen selected from the group consisting of Cl, Br, and I;
   Y is 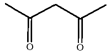 or C₁₋₃ alkyl substituted with at least one -OH; and
   the osmolarity of the aqueous solution is from 1,700 to 2,800 mOSm/L

The pH of the aqueous solution is between 6 to 9. According to certain embodiments, the first active compound of formula (I) is any of the followings,

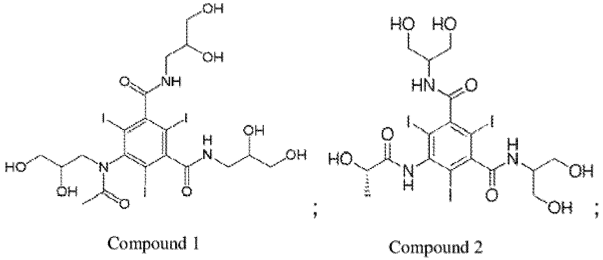

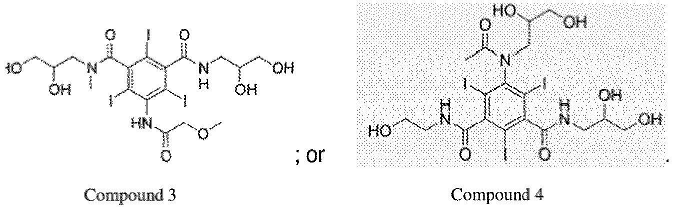

According to other embodiments, the second active compound of formula (II) is any of the followings, 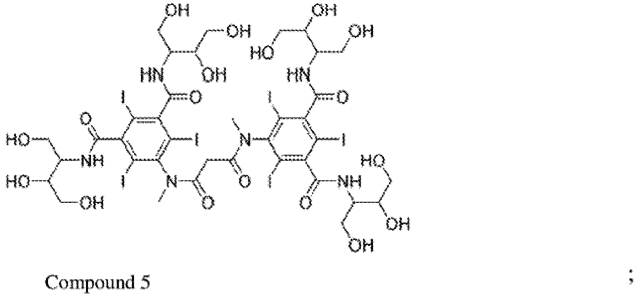 or

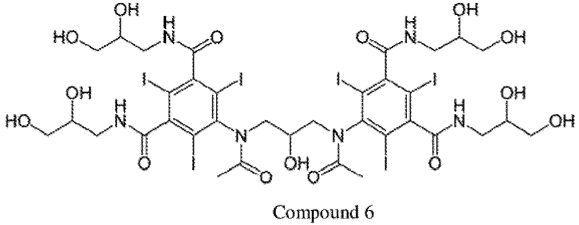

As afore-mentioned, the first active compound of formula (I) has a concentration of at least 10% (w/v) in the aqueous solution; whereas the second active compound of formula (II) has a concentration of at least 10% (w/v) in the aqueous solution.

The present invention also encompasses a method for reversibly rendering a biomaterial of a subject transparent. The method comprises the step of, subjecting the biomaterial of the subject to the treatment of the aqueous solution of the present invention as described above for a sufficient period of time so as to render the biomaterial transparent. The biomaterial may be a tissue or an organ of an insect or a mammal, or a bio-engineered collagen scaffold. The biomaterial may be pre-labeled with an imaging marker that is either a dye or a fluorescent protein to be traced after the tissue becomes transparent.

Unless otherwise indicated, the term "alkyl" means a straight chain or a branched hydrocarbon having from 1 to 20 (*e.g.,* 1 to 10, 1 to 9, 1 to 8, 1 to 7, 1 to 6, 1 to 5, 1 to 4, 1 to 3, 1 to 2, or 1) carbon atoms. Alkyl moieties having from 1 to 4 carbons are referred to as "lower alkyl." Examples of alkyl groups include methyl, ethyl, propyl, isopropyl, n-butyl, t-butyl, isobutyl, 2-isopropyl-3-methyl butyl, pentyl, pentan-2-yl, hexyl, isohexyl, heptyl, heptan-2-yl, 4,4-dimethylpentyl, octyl, 2,2,4-trimethylpentyl, nonyl, decyl, undecyl and dodecyl. Unless otherwise specified, each instance of an alkyl group is independently optionally substituted, *i.e.,* unsubstituted (an "unsubstituted alkyl") or substituted (a "substituted alkyl") with one or more substituents. The term "substituted," when used to describe a chemical structure or moiety, refers to a derivative of that structure or moiety wherein one or more of its hydrogen atoms is substituted with an atom, chemical moiety or functional group such as, but not limited to, OH, -CHO, alkoxy, alkyl (e.g., methyl, ethyl, propyl, t-butyl), halo, -CH₂OCH₃, or

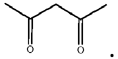

According to the present disclosure an aqueous solution is prepared by mixing specified components such as the active compound of formula (I) or (II), or a combination thereof, in sufficient amount of a solvent, such as water or a salt balanced solution (e.g., a saline, PBS, HBSS and etc.), until each and every component is completely dissolved therein. The respective amounts of the first and second active compounds of formula (I) and (II) in the aqueous solution of the present invention depend on the thickness of the biomaterial intended to be treated. In general, less amount of the first and/or second compounds are required in the aqueous solution for a thinner biomaterial, whereas larger amounts of the first and/or second compounds are required in the aqueous solution for a thinner biomaterial. In general, the aqueous solution of the present disclosure is capable of rendering a biomaterial with up to 5 mm in thickness transparent. The first and second active compound of formula (I) and (II) are respectively present in a concentration of at least 10% (w/v) in the aqueous solution. Once the first active and/or second compounds of formula (I) and/or (II) is/are completely dissolved, the pH and osmolarity of the aqueous solution are respectively adjusted. The pH of the aqueous solution is adjusted to be between 6 and 9. The osmolarity of the aqueous solution is adjusted to be between 1,700 to 2,800 mOSm/L.

The present disclosure also encompasses a method for rendering a biomaterial of a subject transparent. The method comprises the step of, subjecting the biomaterial of the subject to the treatment of the aqueous solution of the present invention as described above for a sufficient period of time, such as 0.1, 0.5, 1 , 2, 3, 4, 5, or 6 hrs; preferably at least 0.5, 1 , 2, 3, 4, 5, 6 or 7 days, so as to render the biomaterial transparent. The biomaterial may be a tissue or an organ of a plant or an animal, preferably a tissue or an organ of an animal, such as insects, fishes, amphibians, birds, and mammals; and more preferably, a tissue or an organ of a mammal. The mammal is not limited to, laboratory animals such as mice, rats, rabbits, guinea pigs, and primates except for humans; pet animals such as dogs and cats; farm animals such as cows, horses, sheep; and humans. A tissue or an organ is preferably derived from a mammal. According to certain examples of the present disclosure, the biomaterial may be tissue from the brain, heart, stomach, pancreas, intestine, liver, lung and ear of a mouse as well as the head of a fly, or a bio-engineered collagen scaffold.

The biomaterial may be pre-labeled with an imaging tracer that is either a dye (e.g., propidium iodine or long-chain lipophilic carbocyanine dye), a fluorescent protein (e.g., tyrosine hydroxylase-Gal4) or an antibody (e.g., anti-tyrosine hydroxlyse), so that the imaging tracer may be traced under a microscope, preferably by a confocal microscope, after the biomaterial is subjected to clear treatment and become transparent. The clear treatment may be performed at a temperature from about room temperature (about 25 °C) to about 50 °C.

Further, the clear treatment of the present method is a reversible process, meaning the transparent biomaterial (e.g., the biomaterial that has been subjected to clear treatment by incubating with the aqueous solution of this invention for a sufficient period of time) may become opaque again, if it were immersed in a suitable buffer solution to remove the first or second compound of formula (I) or (II) embedded or absorbed within the biomaterial during the clear treatment. Suitable buffer solution that may achieve such purpose includes any of an equilibrium salt solution such as PBS and HBSS; an equilibrium salt solution (TBS); an artificial cerebrospinal fluid (ACSF); and basal media for cell culturing such as non-essential amino acid solution (MEM), Dulbecco's DMEM, and Ham's F-12. In one example, the transparent biomaterial (i.e., an intestine of a mouse) becomes opaque again after immersing in a PBS solution for about an hour. Further, antigenicity of the protein(s) in the biomaterial is preserved after the clear treatment, meaning the protein(s) in the biomaterial may be brought back to the state before it was subjected to the clear treatment.

The present invention will now be described more specifically with reference to the following embodiments, which are provided for the purpose of demonstration rather than limitation. While they are typically of those that might be used, other procedures, methodologies, or techniques known to those skilled in the art may alternatively be used.

### EXAMPLES

### Materials and Method

### Clear Treatment

The test subject (e.g., an insect or a mouse) was first perfused with an ice-cold phosphate buffer solution (PBS, pH 7.4) containing 4% paraformaldehyde, so that it was systematically fixed. Then, tissues or organs of interest such as brain, heart, stomach, pancreas, intestine, liver, lung, ear or head (hereafter refer to as "the specimen") were carefully taken out by use of proper tool and immersed in an ice-cold fixing solution as described above for overnight with gentle shaking on an orbital shaker at 4 °C. The specimen were then washed with fresh PBS containing 0.5% Triton X-100 (PBST) three times for one hour at room temperature with gentle shaking on an orbital shaker. For clearing treatment, the specimen was transferred to a working chamber filled with any of the aqueous clearing solution of example 1 and immersed therein. The entire chamber was then covered (e.g., by use of a paper towel or a coverslip so as to ensure the solution in the chamber did not dry out), and kept away from light. The chamber was then placed on an orbital shaker at 35 °C for 2 to 12 hours, depended on the thickness of the specimen, until the specimen became transparent. Fresh clearing solution was added to the chamber, and the entire chamber (with the specimen contained therein) was then sealed with Neo-Mount (Merck) and waited for an hour before it was placed under a microscope for observation.

### EXAMPLE 1 Preparation of the aqueous tissue clearing solution of the present invention

The aqueous tissue clearing solution was prepared by mixing respective components with an aqueous solvent (e.g., water or a buffer solution) in according to the specified fomulations as listed in Table 1 at room temperature and stirred until all components were completely dissolved.

Table 1 The aqueous tissue clearing solution flomulations

**Table 1: The aqueous tissue clearing solution flomulations**

| Formulaiton No. | Compound of Formula (l) (%) | | | | Compound of Formula (II) (%) | | Anti-freezer (%) | Humectant (%) | Solvent System | pH | Osmolarity (mOSm/L) | |
|---|---|---|---|---|---|---|---|---|---|---|---|---|
| | 1 | 2 | 3 | 4 | 5 | 6 | | | | | | |
| 1 | 2.5 | 2.5 | 2.5 | 2.5 | 5 | 5 | DMSO: 5% | Glycerol: 5% | PBS | 8.5 | 1,700 | |
| 2 | 5 | 5 | 5 | 5 | 5 | 5 | DMSO: 10% | Glycerol: 5% | HBSS | 8.5 | 2,400 | |
| 3 | 30 | - | - | - | - | - | DMSO: 10% | Glycerol: 5% | HBSS | 8.5 | 2,800 | |
| 4 | - | 30 | - | - | - | - | DMSO: 10% | Glycerol: 5% | HBSS | 8.5 | 2,800 | |
| 5 | - | - | 30 | - | - | - | DMSO: 10% | Glycerol: 5% | HBSS | 8.5 | 2,800 | |
| 6 | - | - | - | 30 | - | - | DMSO: 10% | Glycerol: 5% | HBSS | 8.5 | 2,800 | |

| Table 1 (continued) | | | | | | | | | | | | |
|---|---|---|---|---|---|---|---|---|---|---|---|---|
| 7 | - | - | - | - | 30 | | DMSO: 10% | Glycerol: 5% | HBSS | 8.5 | 2,800 | |
| 8 | - | - | - | - | - | 30 | DMSO: 10% | Glycerol: 5% | HBSS | 8.5 | 2,800 | |
| 9 | 20 | - | - | - | 10 | | DMSO: 10% | Glycerol: 5% | HBSS | 8.5 | 2,500 | |
| 10 | - | 20 | - | - | 10 | | DMSO: 10% | Glycerol: 5% | HBSS | 8.5 | 2,500 | |
| 11 | - | - | 20 | - | 10 | | DMSO: 10% | Glycerol: 5% | HBSS: | 8.5 | 2,500 | |
| 12 | - | - | - | 20 | 10 | | DMSO: 10% | Glycerol: 5% | HBSS | 8.5 | 2,500 | |
| 13 | 20 | - | - | - | - | 10 | DMSO: 10% | Glycerol: 5% | HBSS | 8.5 | 2,500 | |
| 14 | - | 20 | - | - | - | 10 | DMSO: 10% | Glycerol: 5% | HBSS: | 8.5 | 2,500 | |
| 15 | - | - | 20 | - | - | 10 | DMSO: 10% | Glycerol: 5% | HBSS | 8.5 | 2,500 | |
| 16 | - | - | - | 20 | - | 10 | DMSO: 10% | Glycerol: 5% | HBSS | 8.5 | 2,500 | |

| | | | | | | | | | | | | |
|---|---|---|---|---|---|---|---|---|---|---|---|---|
| PBS: phosphate buffer solution; HBSS: Hank's balanced salt solution. | | | | | | | | | | | | |

### Example 2 Microscopy images of various biomaterials treated with the tissue clearing solution of example 1

### 2.1 Clear treatment on organs derived from a rodent or an insect

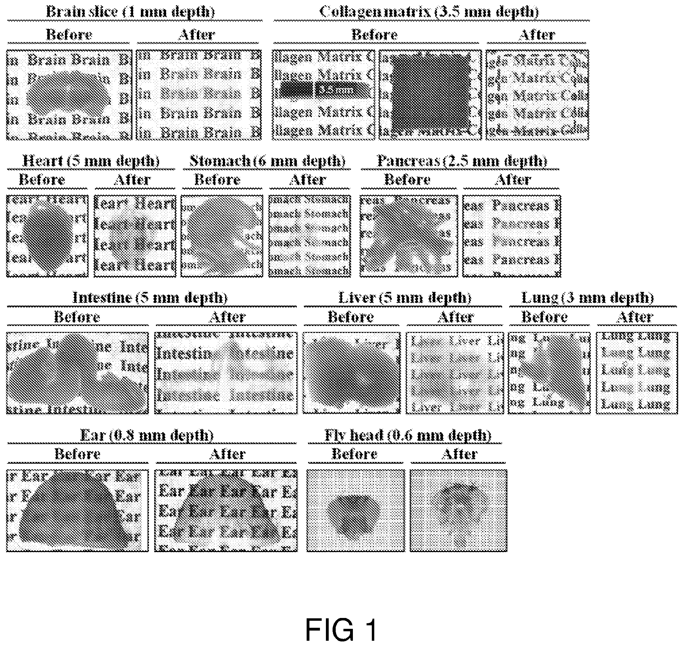

Biomaterials including brain, heart, stomach, pancreas, intestine, liver, lung and ear of a mice as well as the head of a fly and a bio-engineering material such as collagen scaffold were subjected to clear treatment by use of the aqueous tissue clearing solution of example 1 (i.e., formulation No: 2 of Table 1) in according to steps described in "Materials and Methods" section. FIG 1 are photographs of various organs from a mouse or a fly before and after the clear treatment. Photographs in FIG 1 confirmed that the aqueous tissue clearing solution of example 1 is indeed capable of rendering organs or tissues derived from a rodent (i.e., a mouse) or an insect (i.e., a fly) or a bio-engineering material (i.e., a collagen scaffold) transparent.

### 2.2 Clear treatment does not affect the fluorescent singal of a mouse intestine pre-labeled with an organic dye

In this example, mouse intestine was pre-labeled with a fluorescent dye before being subjected to clear treatment.

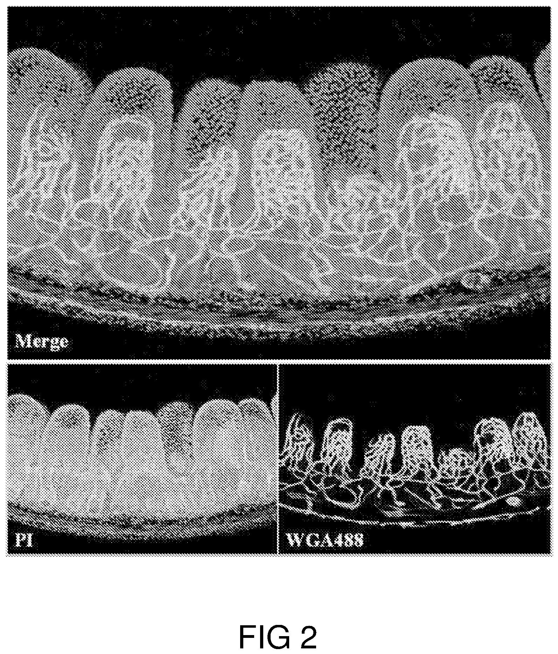

Briefly, the mouse was labled with lectine-Alexa Fluor 488 conjugate (Invitrogen, USA) and systematically fixed by PBS containing 4% paraformaldehyde by cardiac perfusion according to steps described in the "Materials and Methods" section. The mouse intestine was then harvested, and N-acetyl-L-cysteine (0.4N) solution was appllied to remove its luminal content. Then, the intestine was washed 3 times with 0.5% PBST and permeabilized with 1% PBST overnight with gentle shaking on an orbital shaker at room temperature. The intestine was subsequently incubated with propidium iodine (50 µg/mL, PI) for 30 to 60 minutes at 4 °C to label the nuclei. After washing 3 times with 0.5% PBST over a period of an hour on an orbital shaker at room temperature, the intestine was then subjected to clear treatment (Formulation No: 2 of example 1) according to steps described in the "Materials and Methods" section. The confocal images were taken and depicted in photographs of FIG 2. The fluorescent signals of Alexa Fluor 488 conjugate and Pl could be seen within the entire mouse intestine under a conventional fluorescence microscope as well as in a confocal microscope (FIG 2).

### 2.3 Clear treatment does not affect the fluorescent singal of a mouse intestine pre-labeled with a lipophilic membrane dye

In this example, the mouse intestine was pre-labled with a fluorescent long-chain lipophilic cationic indocarbocyanine that would diffuse laterally to stain the entire cell before being subjected to the clear treatment.

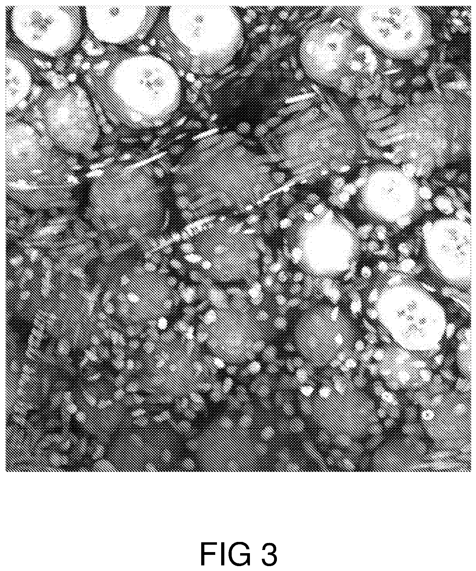

Briefly, the mouse intestine was fixed according to steps described in the "Materials and Methods" section. Then, its luminal content was removed according to steps described in example 2.2. The intestine was then washed 3 times with PBS containing 0.5% Tween-20 and permeabilized with the same solution overnight on an orbital shaker at room temperature. Then, the intestine was incubated with DilC₁₈(3) (1,1'-dioctadecyl-3, 3, 3', 3'-tetramethylindocarbocyanine perchlorate) (1 µg/mL) overnight at room temperature to label its membrane. After washing 3 times with fresh PBS over an hour's period on an orbital shaker at room temperature, the intestine was then subjected to clear treatment (formulation No. 2 of example 1) according to steps described in the "Materials and Methods" section. The photograph in FIG 3 depicts the confocal image of the intestine membrane labled with DilC₁₈(3).

### 2.4 Clear treatment does not affect the fluorescent singnals of the brain of a fly pre-labeled with anti-tyroxin hydrozylate (TH) antibody

In this example, the brain of a fly was pre-labled with a fluorescent dye and an anti-TH antibody before being subjected to the clear treatment.

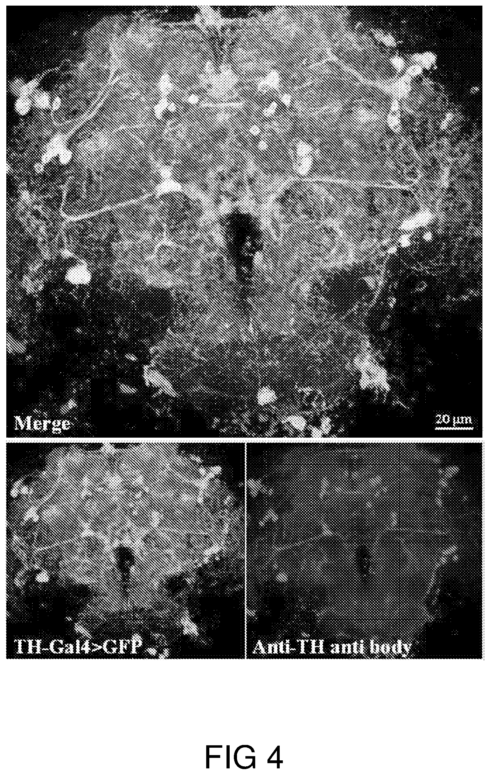

Briefly, the brain of a fly was dissected out and placed in PBS containing 4% paraformaldehyde on ice, then irradiated with microwave (2,450 MHz, 1,100 watts) for 90 s with continuous rotation; and the microwave irradiation was repeated 3 times. The brain was then washed with 1% PBST and 10% normal goat serum for 30 min at room temperature, followed by degassing in a vaccum chamber to expel tracheal air, the chamber was depressurized to 270 mmHg then hold for 10 min. The cycle of degassing was repeated 6 times. The brain was then blocked and permeated with 1% PBST and 10% normal goat serum at 4 °C overnight, and subsequently incubated with 1:100 mouse anti-TH monoclonal antibody (ImmunoStar), followed by 1:250 biotinylated goat anti-mouse IgG (Invitrogen) at 4 °C for 2 days. After washing with 1% PBST for 3 times, the brain was incubated with 1:500 Alexa Fluor 635 streptavidin (Invitrogen) at 4 °C overnight. After extensive washing, the brain was transferred into a working chamber and subjected to clear treatment by soaking in the tissue clearing solution of example 1 (i.e., Formulation No. 1) for 3 min. The working chamber was then covered with a coverslip and sealed by Neo-Mount (Merck), and the entire chamber was stored away from light for at least an hour or until the Neo-Mount was dry. The respective confocal images of the brain labeled with TH-Gal4 and anti-TH monoclonal antibody are depicted in FIG 4.

### Example 3 Tissue recovery after the clear treatment

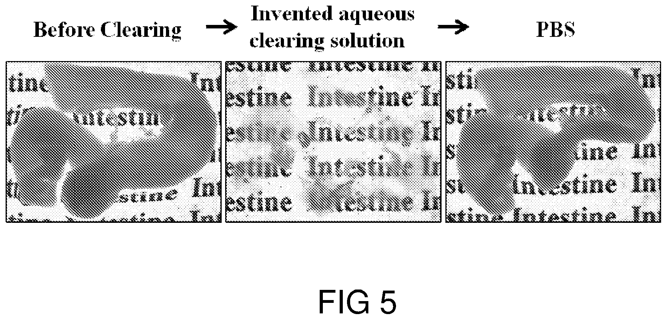

In this example, mouse intestine was fixed and subject to clear treatment in according to similar steps as described in example 2.1. The intestine was then transferred back to PBS, after incubating for about an hour, it slowly became opaque again (FIG 5).

### Example 4 Comparative studies uisng other known tissue clearing agents

### 4.1 Tissue volum change

In this example, the change of tissue volume after the clear treatment was compared using other known tissue clearing agent(s), including FocusClear (which was prepared in according to US Pat No.: 6,472,216 B), SCALEVIEW-A2 solution (which was prepared in according to USPG 2013/0045503); or BABB (Dodt et al., Natue 2007 4(4), 331-336). The entire content of the afore-identifed references are incorporated herein by reference.

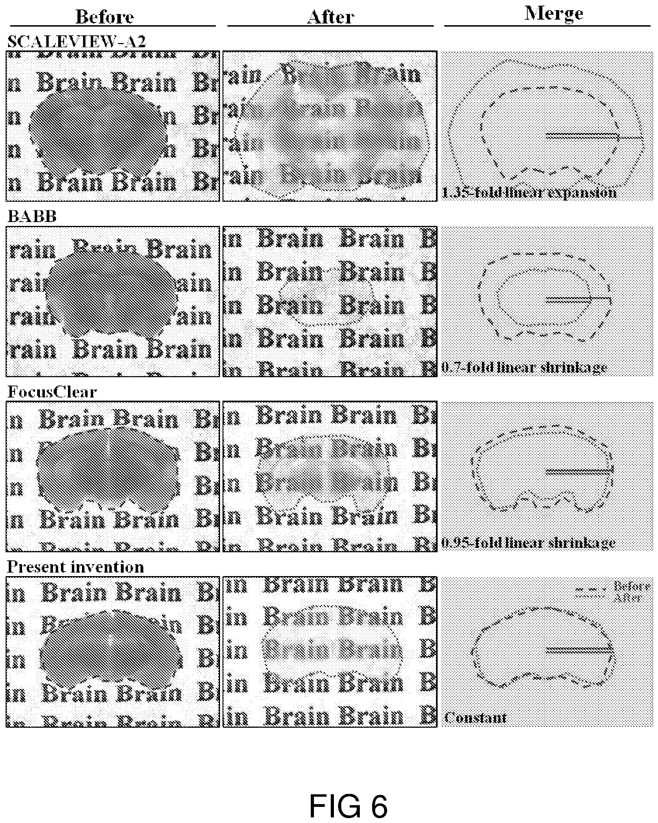

For the visualization and measurement of tissue expansion and/or shrinkage after the clear treatment, about 1 mm in thickness of the fixed mouse brain was incubated in the tissue clearing solution of example 1 (formulation No. 2 of table 1), FocusClear, or SCALEVIEW-A2 solution for 7 days; or in BABB or 5 days; and the change of volume was then measured. Results are depicted in FIG 6.

The brain slice treated with the present tissue clearing solution of example 1 (i.e., Formulaiton No. 2 of table 1) did not show obvious changes in sample volumes. Optical clearing of the brain slice with FocusClear showed a 5% shrinkage, whereas the brain that was treated with BABB exhibited about 35% linear shrinkage. As to the brain that was treated with SCALEVIEW-A2 solution, exhibited about 140% linear expansion as compared with that of the control.

### 4.2 Tissue clearing rate

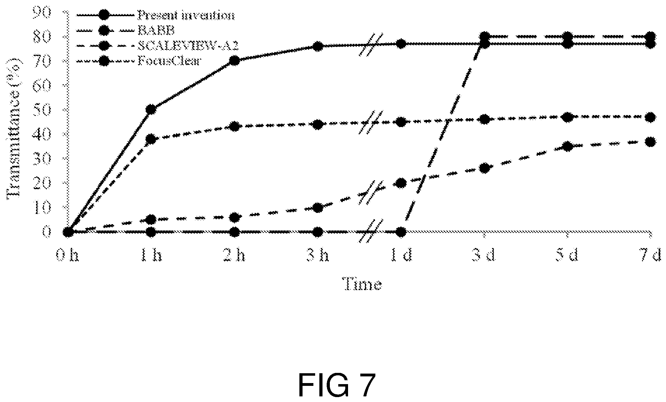

Tissue clearing effect in terms of the speed or rate in which the tissue became clear after the clear treatment was investigated using the tissue clearing solution of example 1 (i.e., Formulaiton No: 2), SCALEVIEW-A2, or FocusClear solution. The percent of transmittance was measured at 633 nm. Results are depicted in FIG 7.

As evidenced in FIG 7, the tissue clearing solution of example 1 has the best and fastest initial tissue clearing effect, about 70% of tissue became clear after being subjected to the clear treatment for 3 hours; FocusClear has the second best effect, with about 40% of tissue became clear after 2 hrs. SCALEVIEW-A has the least effect, with a merely 30% tissue clearance after treatment for 7 days. The BABB exhibited an all-or-none effect on tissue clearing effect, in which about 70% of tissue became transparent after being subjected to clear treatment for one day.

## Claims

1. An aqueous solution for rendering a biomaterial transparent, comprising:
at least 10% (w/v) of a first active compound of formula (I) 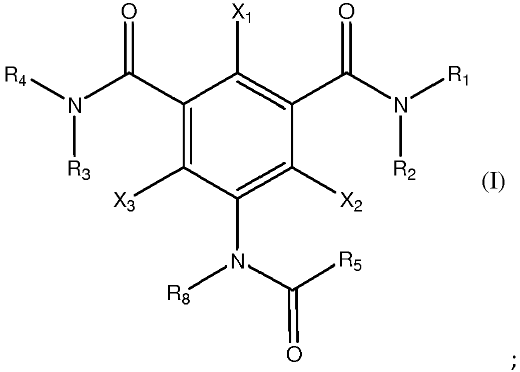 ; or
at least 10% (w/v) of a second active compound of formula (II) 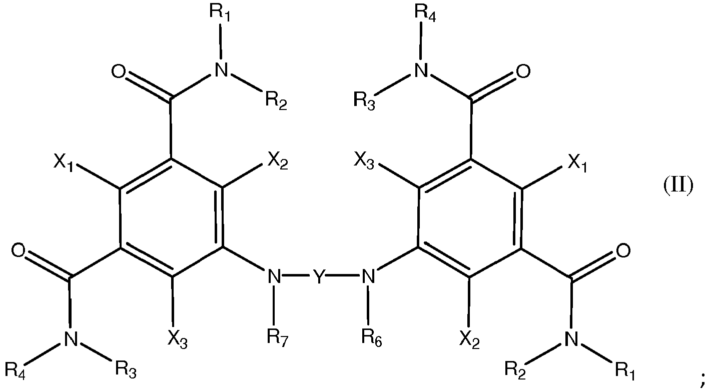
or a combination thereof;
a sufficient amount of a salt balanced buffer solution for dissolving the first or second, or a combination of the active compounds therein and thereby forming the aqueous solution;
5 to 10% (w/v) dimethyl sulfoxide (DMSO); and
5% (w/v) glycerol;
wherein:
R₁, R₂, R₃, R₄ and R₈ are independently H, or C₁₋₆ alkyl substituted with at least two -OH;
R₅ is -CH₂OCH₃ or C₁₋₃ alkyl optionally substituted with at least one -OH;
R₆ and R₇ are independently acetyl or C₁₋₃ alkyl;
X₁, X₂, and X₃ are independently a halogen selected from the group consisting of Cl, Br, and I;
Y is 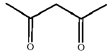 or C₁₋₃ alkyl substituted with at least one -OH;
the pH of the aqueous solution is between 6 to 9; and
the osmolarity of the aqueous solution is from 1,700 to 2,800 mOSm/L.

2. The aqueous solution of claim 1, wherein the first active compound of formula (I) is any of the followings,

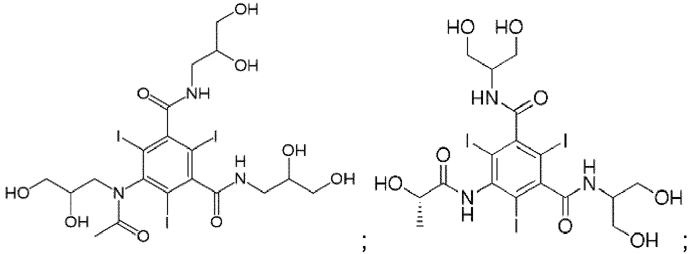

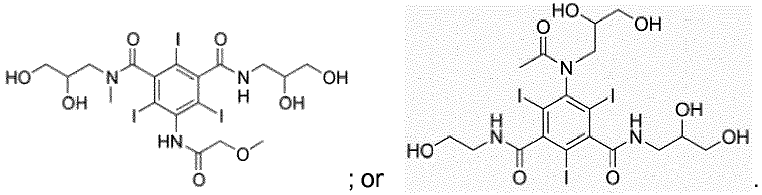

3. The aqueous solution of claim 1, wherein the second active compound of formula (II) is any of the followings, 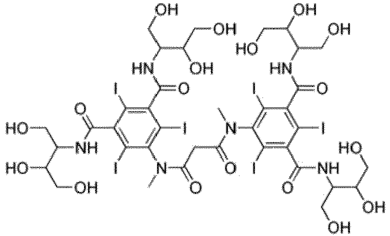 or

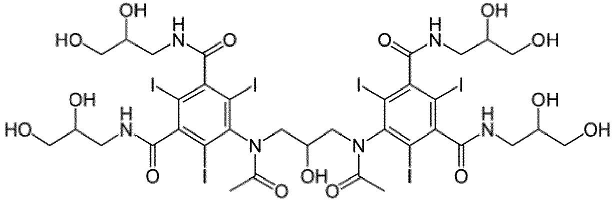

4. A method for rendering a biomaterial transparent, comprising:
subjecting the biomaterial to the treatment of the aqueous solution of claim 1 for a sufficient period of time so as to render the biomaterial transparent.

5. The method of claim 4, wherein the first active compound of formula (I) is any of the followings,

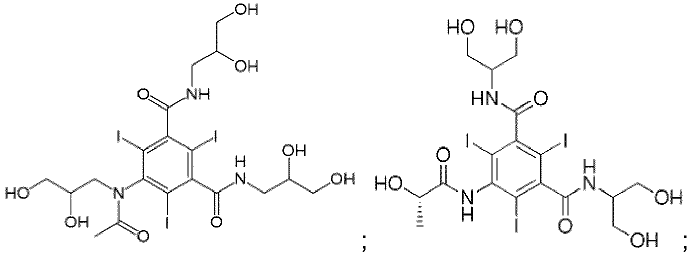

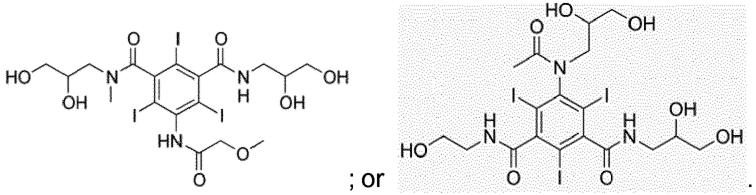

6. The method of claim 4, wherein the second active compound of formula (II) is any of the followings, 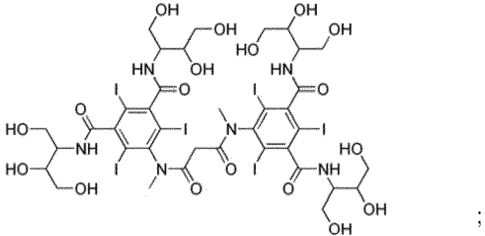 or

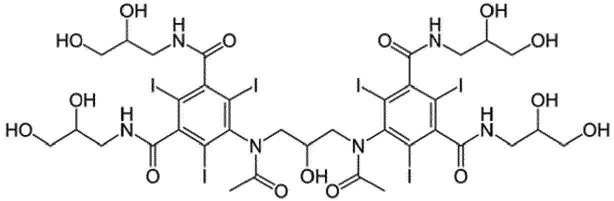

7. The method of claim 4, wherein the biomaterial is a tissue derived from an insect or a mammal, or a bio-engineered collagen scaffold.

8. The method of claim 7, wherein the tissue derived from a mammal is selected from brain, heart, stomach, pancreas, intestine, liver, lung, and ear.

9. The method of claim 7, wherein the tissue is the head of an insect.

10. The method of claim 7, wherein the biomaterial is pre-labeled with an imaging tracer that is a dye, a fluorescent protein, or an antibody conjugated with a fluorescent marker.

## Patentansprüche

1. Wässrige Lösung, um ein Biomaterial transparent zu machen, umfassend:
mindestens 10% (w/v) einer ersten aktiven Verbindung der Formel (I) 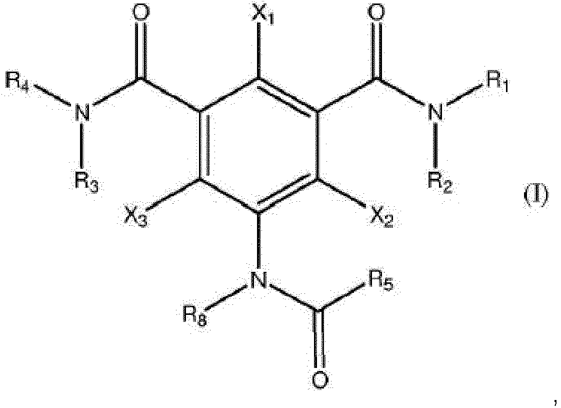 oder
mindestens 10 % (w/v) einer zweiten aktiven Verbindung der Formel (II) 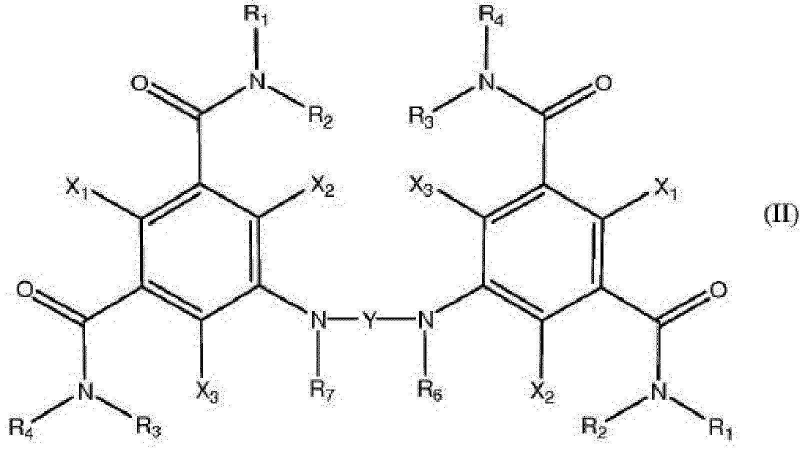
oder einer Kombination davon,
eine ausreichende Menge einer salzausgeglichenen Pufferlösung, um die erste oder zweite oder eine Kombination der aktiven Verbindungen darin zu lösen und dadurch die wässrige Lösung zu bilden,
5 bis 10% (w/v) Dimethylsulfoxid (DMSO) und
5% (w/v) Glycerin,
wobei:
R₁, R₂, R₃, R₄ und R₈ unabhängig voneinander ein H oder ein C₁₋₆-Alkyl sind, das mit mindestens zwei -OH substituiert ist,
R₅ ein -CH₂OCH₃ oder ein C₁₋₃-Alkyl ist, gegebenenfalls substituiert mit mindestens einem -OH,
R₆ und R₇ unabhängig voneinander ein Acetyl oder ein C₁₋₃-Alkyl sind, X₁, X₂ und X₃ unabhängig voneinander ein Halogen sind, ausgewählt aus der Gruppe, bestehend aus Cl, Br und I,
Y 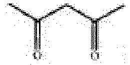 oder ein C₁₋₃-Alkyl ist, das mit mindestens einem -OH substituiert ist,
wobei der pH-Wert der wässrigen Lösung zwischen 6 und 9 liegt und die Osmolarität der wässrigen Lösung 1.700 bis 2.800 mOSm/L beträgt.

2. Wässrige Lösung nach Anspruch 1, bei welcher die erste aktive Verbindung der Formel (I) eine der folgenden ist,

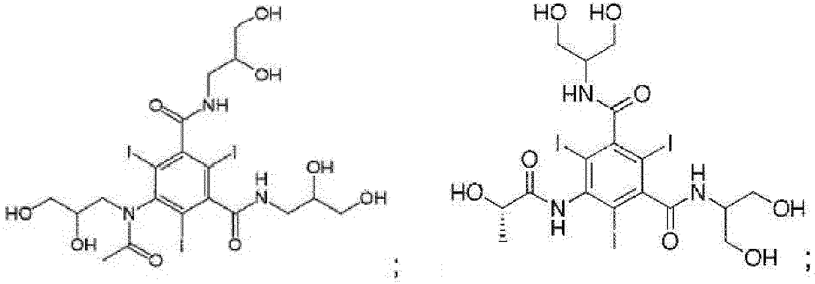

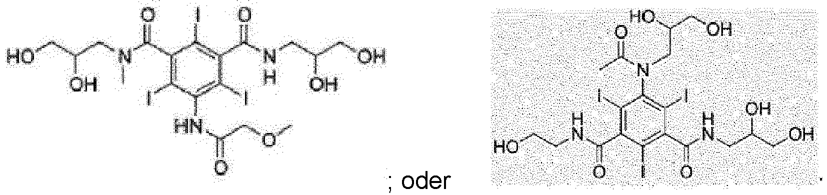

3. Wässrige Lösung nach Anspruch 1, bei welcher die zweite aktive Verbindung der Formel (II)eine der folgenden ist, 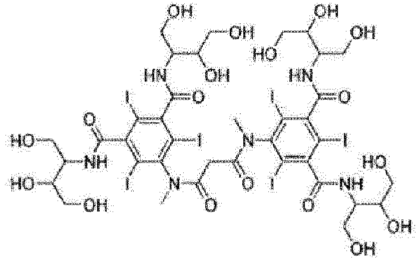 oder

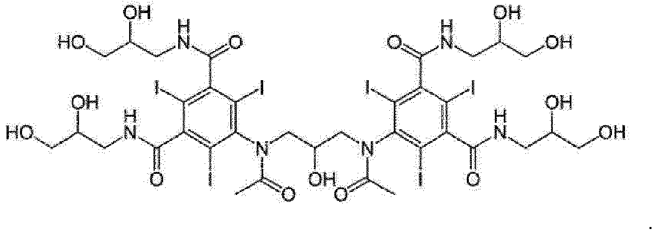

4. Verfahren, um ein Biomaterial transparent zu machen, umfassend:
Behandeln des Biomaterials mit der wässrigen Lösung nach Anspruch 1 für eine ausreichende Zeitspanne, um das Biomaterial transparent zu machen.

5. Verfahren nach Anspruch 4, bei welchem die erste aktive Verbindung der Formel (I) eine der folgenden ist,

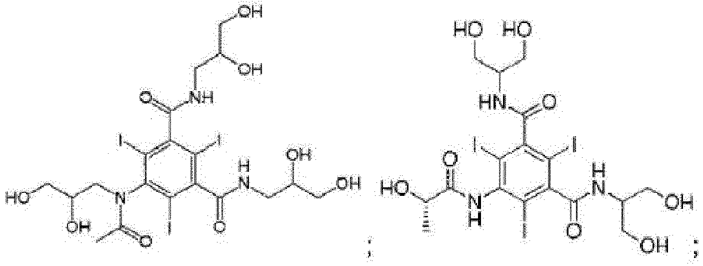

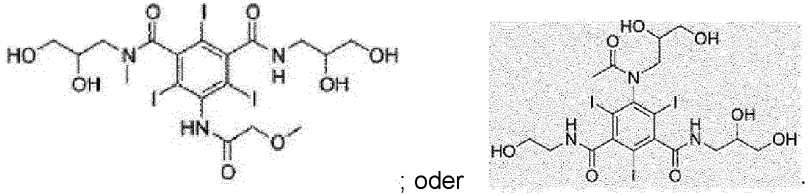

6. Verfahren nach Anspruch 4, bei welchem die zweite aktive Verbindung der For-
mel (II) eine der folgenden ist, 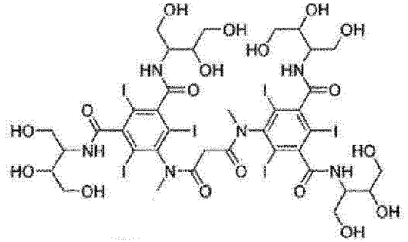 oder

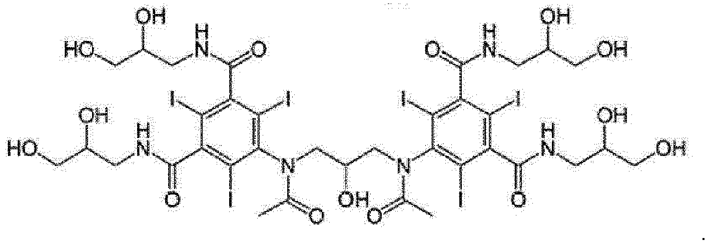

7. Verfahren nach Anspruch 4, bei welchem das Biomaterial ein von einem Insekt oder einem Säugetier stammendes Gewebe oder ein biotechnologisch hergestelltes Kollagengerüst ist.

8. Verfahren nach Anspruch 7, bei welchem das von einem Säugetier stammende Gewebe aus Gehirn, Herz, Magen, Bauchspeicheldrüse, Darm, Leber, Lunge und Ohr ausgewählt ist.

9. Verfahren nach Anspruch 7, bei welchem das Gewebe der Kopf eines Insekts ist.

10. Verfahren nach Anspruch 7, bei welchem das Biomaterial mit einem bildgebenden Tracer vormarkiert ist, der ein Farbstoff, ein fluoreszierendes Protein oder ein mit einem Fluoreszenzmarker konjugierter Antikörper ist.

## Revendications

1. Solution aqueuse pour rendre transparent un biomatériau, comprenant:
au moins 10 % (p/v) d'un premier composé actif de formule (l) 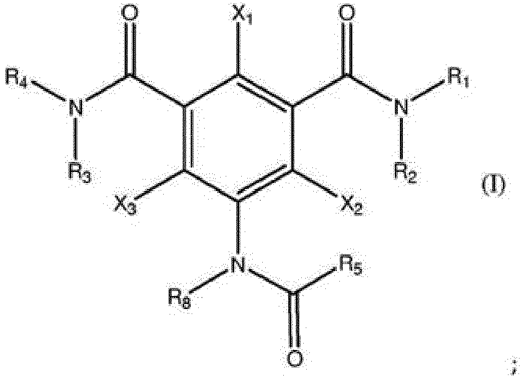 ou 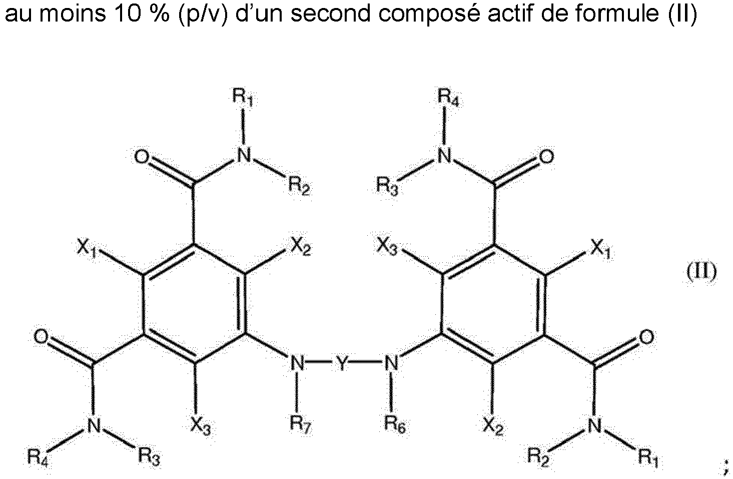
ou une combinaison de ceux-ci;
une quantité suffisante d'une solution tampon équilibrée en sel pour dissoudre le premier ou le second, ou une combinaison des composés actifs en son sein et
former ainsi la solution aqueuse;
5 à 10 % (p/v) de diméthylsulfoxyde (DMSO); et
5% (p/v) de glycérol;
dans laquelle
R₁, R₂, R₃, R₄ et R₈ sont indépendamment H, ou un alkyle en C₁₋₆ substitué par au moins deux -OH;
R₅ est —CH₂OCH₃ ou un alkyle en C₁₋₃ facultativement substitué par au moins un -OH;
R₆ et R₇ sont indépendamment un acétyle ou un alkyle en C₁₋₃;
X₁, X₂ et X₃ sont indépendamment un halogène choisi dans le groupe constitué par Cl, Br et I;
Y est 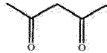 ou un alkyle en C₁₋₃ substitué par au moins un -OH;
le pH de la solution aqueuse est compris entre 6 et 9; et
l'osmolarité de la solution aqueuse est comprise entre 1 700 et 2 800 mOSm/L.

2. Solution aqueuse selon la revendication 1, dans laquelle le premier composé ac-
tif de formule (l) est l'un quelconque des suivants,

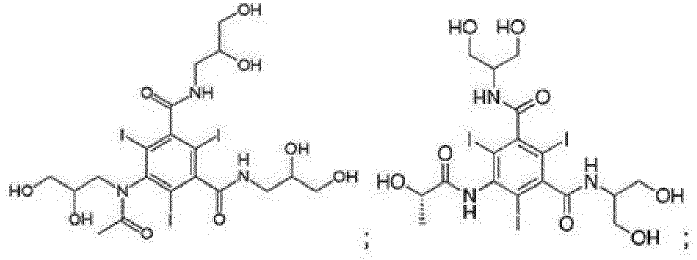

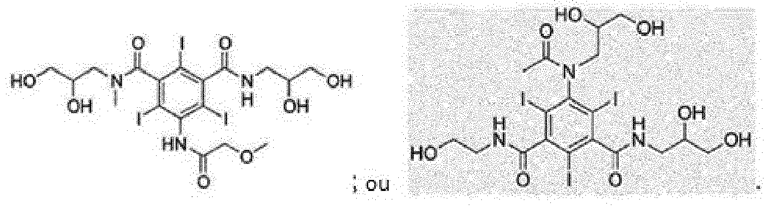

3. Solution aqueuse selon la revendication 1, dans laquelle le second composé actif de formule (II) est l'un quelconque des suivants, 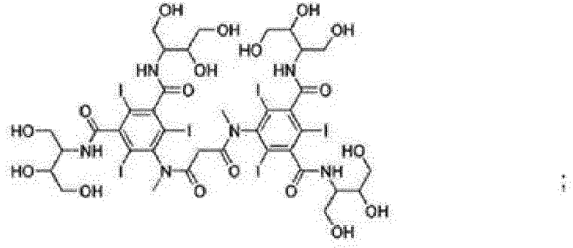 ou

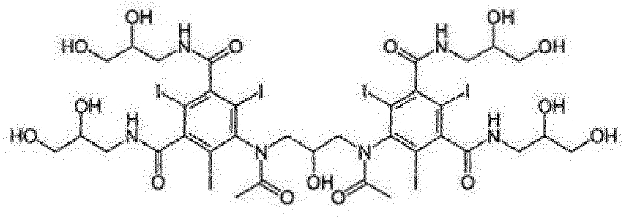

4. Procédé pour rendre transparent un biomatériau, comprenant l'étape consistant à:
soumettre le biomatériau au traitement de la solution aqueuse de la revendication 1 pendant une période de temps suffisante pour rendre le biomatériau transparent.

5. Procédé selon la revendication 4, dans lequel le premier composé actif de formule (l) est l'un quelconque des suivants,

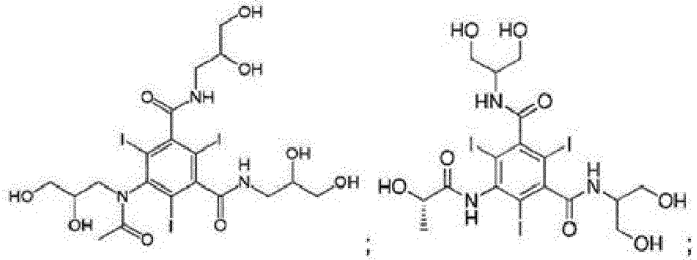

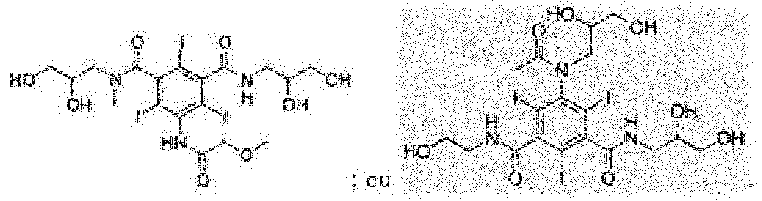

6. Procédé selon la revendication 4, dans lequel le second composé actif de formule (II) est l'un quelconque des suivants, 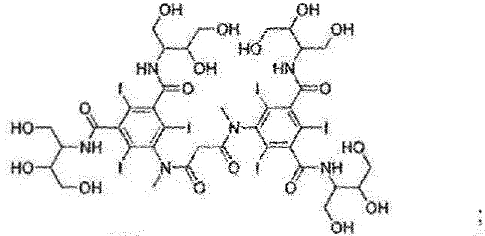 ; or

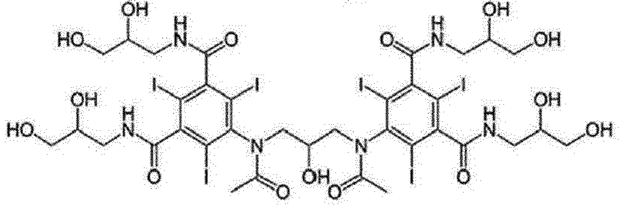

7. Procédé selon la revendication 4, dans lequel le biomatériau est un tissu dérivé d'un insecte ou d'un mammifère, ou un échafaudage de collagène obtenu par bio-ingénierie.

8. Procédé selon la revendication 7, dans lequel le tissu dérivé d'un mammifère est choisi parmi le cerveau, le cœur, l'estomac, le pancréas, l'intestin, le foie, les poumons et l'oreille.

9. Procédé selon la revendication 7, dans lequel le tissu est la tête d'un insecte.

10. Procédé selon la revendication 7, dans lequel le biomatériau est pré-marqué avec un traceur d'imagerie qui est un colorant, une protéine fluorescente ou un anticorps conjugué avec un marqueur fluorescent.
